# EUROPÄISCHE PATENTSCHRIFT

(11) **EP 3 102 462 B1**
(45) Veröffentlichungstag und Bekanntmachung des Hinweises auf die Patenterteilung: **13.12.2017**
(21) Anmeldenummer: 15729495.0
(22) Anmeldetag: 17.06.2015
(51) Int. Cl.: B60R 5/04

(54) **LADEBODENANORDNUNG UND KRAFTFAHRZEUG MIT EINER DERARTIGEN LADEBODENANORDNUNG**
LOADING FLOOR ARRANGEMENT AND MOTOR VEHICLE WITH SUCH A LOADING FLOOR ARRANGEMENT
DISPOSITIF DE PLANCHER DE CHARGEMENT ET VÉHICULE AUTOMOBILE AVEC UN TEL DISPOSITIF DE PLANCHER DE CHARGEMENT

(30) Priorität: 09.10.2014 DE 102014220548
(43) Veröffentlichungstag der Anmeldung: 14.12.2016
(73) Patentinhaber: Volkswagen Aktiengesellschaft, 38440 Wolfsburg (DE)
(72) Erfinder: KOCH, Christian, 38116 Braunschweig (DE); LAUFELD, Philipp, 14612 Falkensee (DE)
(86) Internationale Anmeldenummer: PCT/EP2015/063647
(87) Internationale Veröffentlichungsnummer: WO 2016/055172

(56) Entgegenhaltungen:
- EP-A1- 1 736 364
- US-A- 5 257 846

## Beschreibung

Die Erfindung betrifft eine Ladebodenanordnung gemäß der Merkmalskombination des Patentanspruchs 1 der Erfindung. Gemäß Anspruch 7 der Erfindung betrifft dieselbe ferner ein Kraftfahrzeug, insbesondere einen Personenkraftwagen, mit einer derartigen Ladebodenanordnung.

Die DE 10 2005 029 341 A1 beschreibt einen Laderaum für ein Kraftfahrzeug, welcher mittels eines zweiteiligen Ladebodens in einen oberen und einen unteren Stauraum unterteilt ist. Der untere Stauraum weist einen Steg auf, der diesen Stauraum in eine erste und eine zweite Staumulde unterteilt. An dem Steg ist ein Scharnier ortsfest angeordnet, welches zwei schwenkbare Klappen des zweiteiligen Ladebodens lagert. Aus der DE 100 54 572 A1 ist ein Ladesystem für den Laderaum eines Fahrzeugs bekannt, welches einen mittels Zapfen in seitlichen Führungsnuten einer Halteeinrichtung schwenkbar und verschiebbar gelagerten Ladeboden aufweist. Beidseitig des Ladebodens sind jeweils vordere erste und hintere zweite Zapfen vorgesehen, wobei die vorderen ersten Zapfen seitlich vorn am Ladeboden angeordnet sind und gleichzeitig als Schwenk- und Verschiebelager fungieren. Die hinteren Zapfen fungieren als Verschiebelager und können zum Hochschwenken des Ladebodens durch einen Ausbruch in den Führungsnuten aus denselben herausgeführt werden. Die EP 2 399 783 A1 beschreibt eine zur vorbeschriebenen ähnliche Lösung der Lagerung eines Ladebodens. Die EP 2 287 045 A2 beschreibt einen in Führungen verschiebbar gelagerten Ladeboden im Kofferraum eines Personenkraftwagens. Zur Vorderkante des Ladebodens hin ist eine Klappe angeordnet, die mittels eines Scharniers am Ladeboden befestigt ist. Das Scharnier ist durch einen Teppichboden gebildet. Die EP 2 226 219 A1 beschreibt einen aus einem horizontal und einem vertikal angeordneten Teil bestehenden zweiteiligen Ladeboden. Der horizontale Teil des Ladebodens ist relativ zum vertikalen Teil schwenkbar. Als Scharnier fungiert hier ebenfalls ein Teppichboden.

Aus der US 5 257 846 A1 ist eine reversible Deckelanordnung und Ladebodenanordnung für ein Kraftfahrzeug nach dem Oberbegriff von Anspruch 1 bekannt. Die Deckelanordnung umfasst eine Bodenplatte mit einer Öffnung sowie ein Deckelelement, das zum Schließen der Öffnung bemessen ist. Das Deckelelement weist erste und zweite Seitenflächen auf, die einander gegenüberliegen. Ferner weist das Deckelelement ein Paar von gegenüberliegend angeordneten Führungsschienen zur Führung einer Gleitbewegung des Deckelelements auf, wobei die Führungsschienen entlang gegenüberliegender Seiten der Öffnung der Bodenplatte befestigt sind.

Die EP 1 736 364 A1 beschreibt eine Laderaumfunktionsvorrichtung für ein Kraftfahrzeug, insbesondere für einen Personenkraftwagen, mit wenigstens zwei zueinander parallelen Führungsschienen. Die Führungsschienen sind wenigstens einer Laderaumbegrenzungsfläche zugeordnet, wobei in jeder Führungsschiene wenigstens ein Funktionsschlitten längs verfahrbar gelagert ist, und wobei Blockiermittel zum Arretieren des Funktionsschlittens relativ zu der Führungsschiene vorgesehen sind. Jeder Führungsschiene ist wenigstens ein Funktionsschlitten zugeordnet, und es ist eine zumindest abschnittsweise formstabile Quererstreckungseinheit vorgesehen, die sich zwischen den Führungsschienen erstreckt und mit den Funktionsschlitten verbunden ist.

Aufgabe der Erfindung ist es, eine im Hinblick auf den Stand der Technik alternative Ladebodenanordnung mit einem schwenk- und verschiebbaren Ladeboden anzugeben, welche Ladebodenanordnung bei Gewährleistung der besagten Schwenk- und Verschiebefunktion eines minimierten Bauraums für erforderliche Lagerungs- und Führungssysteme bedarf. Darüber hinaus ist es Aufgabe der Erfindung, ein Kraftfahrzeug, insbesondere einen Personenkraftwagen, mit einer derartigen Ladebodenanordnung bereitzustellen.

Gelöst wird die gestellte Aufgabe durch eine Ladebodenanordnung in einem Kraftfahrzeug, insbesondere im Kofferraum eines Personenkraftwagens, mit einem Ladeboden, der mittels zweier Scharniere um eine in Fahrzeugquerrichtung (Y-Richtung) weisende Schwenkachse schwenkbar sowie in Fahrzeuglängsrichtung (X-Richtung) verschiebbar in seitlichen Führungsnuten einer Fahrzeuginnenverkleidung des Kraftfahrzeugs gelagert ist, wobei in Fahrzeugquerrichtung (Y-Richtung) gesehen beidseitig am vorderen Ende des Ladebodens je ein Scharnier angeordnet ist, welche Scharniere jeweils durch ein erstes und ein zweites untereinander schwenkbeweglich verbundenes Scharnierteil gebildet sind, wobei die ersten Scharnierteile jeweils mit dem Ladeboden fest verbunden sind und die zweiten Scharnierteile mittels je eines in Fahrzeugquerrichtung (Y-Richtung) gesehen nach Fahrzeug-außen weisenden Zapfens in je einer der Führungsnuten verschiebbar gelagert sind, und wobei die Zapfen koaxial zueinander angeordnet sind und im Hinblick auf die Schwenkachse sowohl ein von der Schwenkachse unterschiedliches X-Niveau als auch ein von der Schwenkachse unterschiedliches Z-Niveau aufweisen.

Durch diese Maßnahme ist vorteilhaft die Schwenkfunktion örtlich von der Verschiebefunktion separiert, wodurch Möglichkeiten eröffnet sind, den Bauraum für erforderliche Lagerungs- und Führungssysteme, insbesondere für besagte Führungsnuten zu minimieren.

Die Unteransprüche beschreiben bevorzugte Weiterbildungen oder Ausgestaltungen der Erfindung. Für die Zwecke der vorliegenden Beschreibung soll die übliche Fahrtrichtung eines Kraftfahrzeugs mit "-x" ("minus x"), die Richtung entgegen seiner üblichen Fahrtrichtung mit "+x" ("plus x"), ausgehend von der üblichen Fahrtrichtung (-x) die Richtung in der Horizontalen quer zur x-Richtung nach rechts gesehen mit "+y", ausgehend von der üblichen Fahrtrichtung (-x) die Richtung in der Horizontalen quer zur x-Richtung nach links gesehen mit "-y", die Richtung in der Vertikalen quer zur x-Richtung nach oben gesehen mit "+z", und die Richtung in der Vertikalen quer zur x-Richtung nach unten gesehen mit "-z" bezeichnet werden. Diese Bezeichnungsweise der Raumrichtungen in kartesischen Koordinaten entspricht dem in der Kraftfahrzeugindustrie allgemein verwendeten Koordinatensystem. Überdies werden Begriffe wie "vorne", "hinten", "oben" "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicherweise gebraucht werden.

Bevorzugt ist vorgesehen, dass die Zapfen nach hinten (+X-Richtung) und nach unten (-Z-Richtung) versetzt zur besagten Schwenkachse am zweiten Scharnierteil angeordnet sind. Zum einen ist hierdurch vorteilhaft die Führungsnut kürzer ausbildbar. Zum anderen ist vorteilhaft die Führungsnut durch den Ladeboden verdeckt und demgemäß außerhalb des Sichtfeldes eines Fahrzeugnutzers. Eine einfache und kostengünstige Ausführungsform des Scharniers erzielt man dadurch, dass das jeweilige zweite Scharnierteil durch einen oberen Verbindungsabschnitt zur schwenkbaren Anbindung des zweiten Scharnierteils an das erste Scharnierteil und durch einen unteren Lagerungsabschnitt gebildet ist, wobei am Lagerungsabschnitt der Zapfen fest angeordnet ist. Bevorzugt erstrecken sich dabei das erste Scharnierteil und der Verbindungsabschnitt des zweiten Scharnierteils in einem abgelegten Betriebszustand des Ladebodens in oder nahezu in einer gemeinsamen X-Y-Ebene des Kraftfahrzeugs, wodurch der erforderliche Bauraum für besagtes Scharnier vorteilhaft minimiert ist. Weiter vorteilhaft ist der Lagerungsabschnitt durch einen fest mit dem Verbindungsabschnitt verbundenen und den Höhenunterschied zwischen der Schwenkachse und dem jeweiligen Zapfen bewirkenden Steg gebildet, der sich in oder nahezu in einer X-Z-Ebene des Kraftfahrzeugs erstreckt. Ein derartiger Steg kann insbesondere in Fahrzeuglängs- und in Fahrzeughochrichtung (X-, Z-Richtung) Kräfte ausreichend übertragen und aufnehmen. In Fahrzeugquerrichtung (Y-Richtung) ist der Steg bevorzugt durch die die Führungsnut ausbildende Fahrzeuginnenverkleidung abgestützt. Weiter bevorzugt ist das zweite Scharnierteil samt Zapfen einstückig ausgebildet, woraus vorteilhaft Einsparungen an Material sowie an Fertigungs- und Montagezeit resultieren.

Die Erfindung betrifft auch ein Kraftfahrzeug, insbesondere einen Personenkraftwagen, mit einer Ladebodenanordnung der vorbeschriebenen Art.

Nachstehend wird die Erfindung anhand eines in den Zeichnungen schematisch dargestellten Ausführungsbeispiels näher erläutert. Sie ist jedoch nicht auf dieses beschränkt, sondern erfasst alle durch die Patentansprüche definierten Ausgestaltungen. Es zeigen:
- Fig. 1: ein Kraftfahrzeug in einer Seitenansicht, mit einem Ladeboden einer erfindungsgemäßen Ladebodenanordnung,
- Fig. 2: den Ladeboden nach Fig. 1 in einer Einzelansicht mit zwei daran befestigten Scharnieren (Unteransicht),
- Fig. 3: den Ladeboden in einer Seitenansicht, sowohl in einer abgelegten als auch in einer hochgeschwenkten bzw. hochgeklappten Stellung,
- Fig. 4: das linke Scharnier nach Fig. 2 in einer perspektivischen Seitenansicht bei abgelegtem Ladeboden, und
- Fig. 5: das linke Scharnier nach Fig. 2 in einer perspektivischen Seitenansicht bei hochgeklapptem Ladeboden.

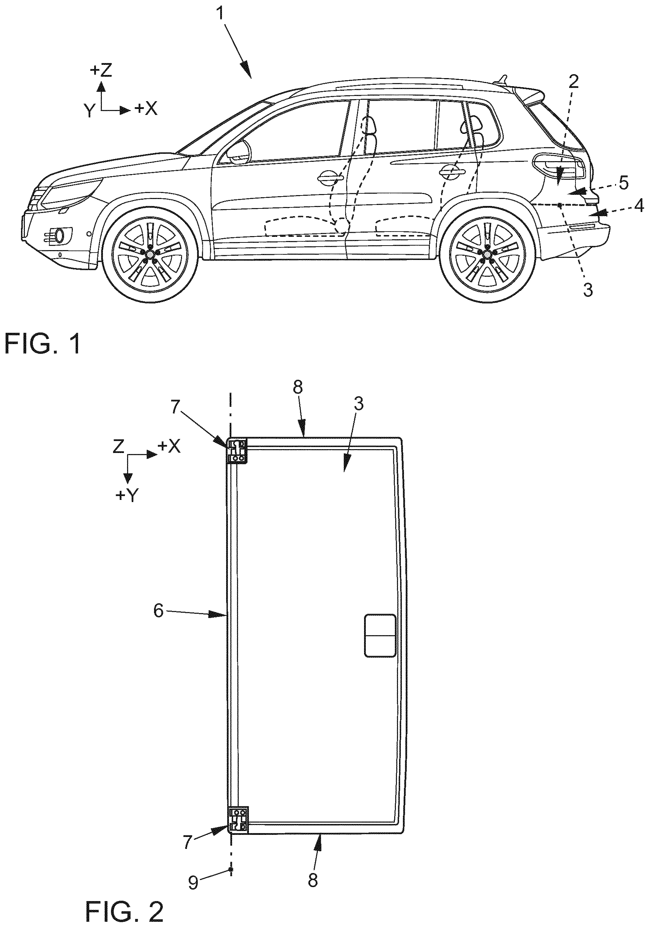

Fig. 1 zeigt ein Kraftfahrzeug 1, vorliegend einen Personenkraftwagen, mit einem heckseitigen Kofferraum 2, in welchem ein Ladeboden 3 angeordnet ist. Der Ladeboden 3 unterteilt besagten Kofferraum 2 in einen unteren und einen oberen Stauraum 4, 5. Im unteren Stauraum 4 kann beispielsweise ein Reserverad angeordnet sein, wogegen der obere Stauraum im Allgemeinen zum Verstauen von Ladegut vorgesehen ist (nicht zeichnerisch dargestellt).

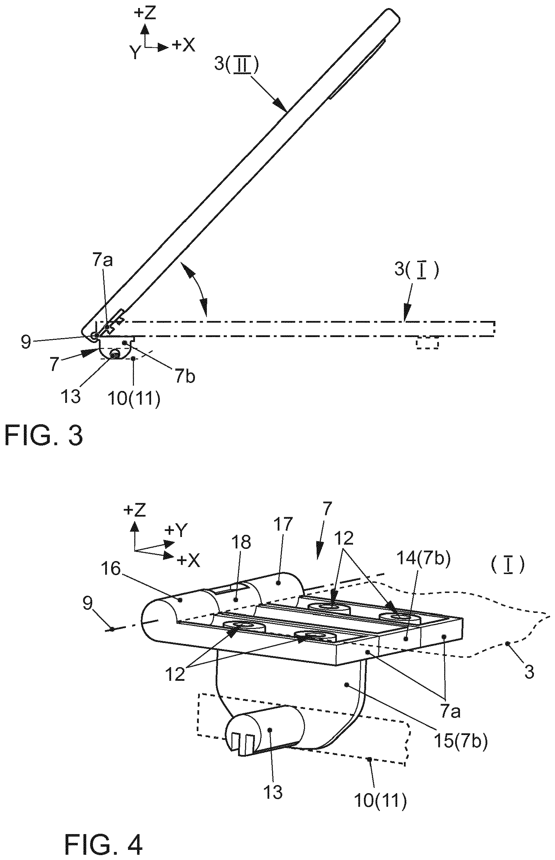

Gemäß Fig. 2 ist der besagte Ladeboden 3 plattenförmig ausgebildet und weist an seinem vorderen Ende bzw. im Bereich seiner vorderen Kante 6 zwei voneinander beabstandet angeordnete Scharniere 7 auf. Die Scharniere 7 sind in Fahrzeugquerrichtung (Y-Richtung) gesehen beidseitig des Ladebodens 3 bzw. weit außen an demselben angeordnet und schließen an eine Seitenkante 8 des Ladebodens 3 an. Vermittels der Scharniere 7 ist der Ladeboden 3 um eine in Fahrzeugquerrichtung (Y-Richtung) weisende Schwenkachse 9 von einer abgelegten respektive horizontalen oder nahezu horizontalen ersten Betriebsstellung (I) - strichpunktierte Linienführung - in eine hochgeschwenkte zweite Betriebsstellung (II) - durchgehende Linienführung - schwenkbar sowie in Fahrzeuglängsrichtung (X-Richtung) verschiebbar in äußerst schematisch dargestellten seitlichen Führungsnuten 10 gelagert (vgl. insbes. Fig. 3). Die Führungsnuten 10 sind jeweils in einer Fahrzeuginnenverkleidung 11 des Kraftfahrzeugs 1 ausgebildet. Die Scharniere 7 können aus Metall oder Kunststoff bestehen.

Die Scharniere 7, von denen in den Fig. 3 bis 5 lediglich das linke Scharnier 7 des Ladebodens 3 dargestellt ist, sind jeweils durch ein erstes und ein zweites untereinander schwenkbeweglich verbundenes Scharnierteil 7a, 7b gebildet. Die ersten Scharnierteile 7a sind vorliegend plattenförmig sowie zweigeteilt ausgebildet. Die beiden Teile eines jeden ersten Scharnierteils 7a sind beabstandet voneinander jeweils mit dem Ladeboden 3 fest verbunden. Zur festen Verbindung derselben werden mechanische Befestigungsmittel, wie beispielsweise nicht zeichnerisch dargestellte Befestigungsschrauben oder Niete bevorzugt. Gemäß den Fig. 2, 4 und 5 sind beispielgebend vier Aufnahmebohrungen 12 im jeweiligen ersten zweigeteilten Scharnierteil 7a bzw. je Teil zwei Aufnahmebohrungen 12 vorgesehen, welche von besagten Befestigungsschrauben oder Nieten durchsetzt sind.

Die zweiten Scharnierteile 7b sind mittels je eines in Fahrzeugquerrichtung (Y-Richtung) gesehen nach Fahrzeug-außen weisenden Zapfens 13 in je einer der Führungsnuten 10 verschiebbar gelagert. Die Zapfen 13 der beiden zweiten Scharnierteile 7b sind koaxial zueinander angeordnet und weisen im Hinblick auf die Schwenkachse 9 sowohl ein von der Schwenkachse 9 unterschiedliches X-Niveau als auch ein von der Schwenkachse 9 unterschiedliches Z-Niveau auf.

Wie insbesondere aus den Fig. 3 bis 5 sehr gut ersichtlich ist, sind bevorzugt die Zapfen 13 nach hinten (+X-Richtung) und nach unten (-Z-Richtung) versetzt zur besagten Schwenkachse 9 am zweiten Scharnierteil 7b angeordnet. Weiter bevorzugt ist das zweite Scharnierteil 7b samt Zapfen 13 einstückig ausgebildet und beispielsweise aus Kunststoff nach einem Kunststoff-Spritzgießverfahren hergestellt. Insoweit besteht bevorzugt auch das vorliegend zweigeteilte erste Scharnierteil 7a aus einem Kunststoff.

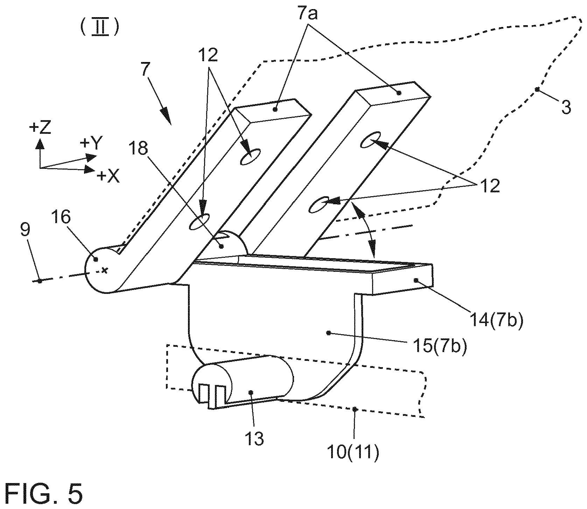

Wie den Fig. 4 und 5 weiter zu entnehmen ist, ist das jeweilige zweite Scharnierteil 7b durch einen oberen plattenförmigen Verbindungsabschnitt 14 zur schwenkbaren Anbindung des zweiten Scharnierteils 7b an das erste Scharnierteil 7a und durch einen unteren Lagerungsabschnitt 15 gebildet. Am besagten Lagerungsabschnitt 15 ist der Zapfen 13 fest angeordnet. Das erste Scharnierteil 7a und der Verbindungsabschnitt 14 des zweiten Scharnierteils 7b sind in einem abgelegten Betriebszustand des Ladebodens 3 bzw. in der horizontalen oder nahezu horizontalen ersten Betriebsstellung (I) in oder nahezu in einer gemeinsamen X-Y-Ebene des Kraftfahrzeugs 1 angeordnet, wodurch der erforderliche Bauraum für besagtes Scharnier 7 vorteilhaft minimiert ist (vgl. Fig. 4). Der Lagerungsabschnitt 15 ist durch einen fest mit dem Verbindungsabschnitt 14 verbundenen und den Höhenunterschied zwischen der Schwenkachse 9 und dem jeweiligen Zapfen 13 bewirkenden Steg gebildet. Der besagte Steg erstreckt sich bevorzugt in oder nahezu in einer X-Z-Ebene des Kraftfahrzeugs 1. Ein derartiger Steg kann insbesondere in Fahrzeuglängs- und in Fahrzeughochrichtung (X-, Z-Richtung) Kräfte ausreichend übertragen und aufnehmen.

Wie den Fig. 4 und 5 noch zu entnehmen ist, ist gemäß diesem Ausführungsbeispiel der plattenförmige Verbindungsabschnitt 14 des zweiten Scharnierteils 7b zwischen den beiden Teilen des zweigeteilten plattenförmigen, ersten Scharnierteils 7a angeordnet und somit in bzw. an diesem ersten Scharnierteil 7a sozusagen beidseitig schwenkgelagert. Im Hinblick darauf weisen die beiden Teile des zweigeteilten ersten Scharnierteils 7a zwei koaxial und zueinander beabstandet angeordnete Aufnahmebuchsen 16, 17 auf, in denen bevorzugt eine nicht zeichnerisch dargestellte Steckachse angeordnet ist. Zwischen den Aufnahmebuchsen 16, 17 ist das zweite Scharnierteil 7b mittels einer am Verbindungsabschnitt 14 ausgebildeten Lagerbuchse 18 auf der Steckachse schwenkgelagert. Die Steckachse kann als separates Bauteil ausgebildet oder einstückiger Bestandteil eines Teils des zweigeteilten ersten Scharnierteils 7a sein.

Durch diese Maßnahme ist der stegförmige Lagerungsabschnitt 15 seitlich beabstandet zur Seitenkante 8 des Ladebodens 3 angeordnet. Gemäß einer bevorzugten Ausführungsform der Erfindung überragt der Zapfen 13 die besagte Seitenkante 8 nicht. Hieraus resultiert eine Führungsnut 10 der Fahrzeuginnenverkleidung 11, die infolge einer sickenförmigen Ausbildung der Fahrzeuginnenverkleidung 11 sozusagen in die besagte Beabstandung zwischen dem stegförmigen Lagerungsabschnitt 15 und der Seitenkante 8 des Ladebodens hineinreicht und den Zapfen 13 aufnimmt. Bevorzugt reicht die Fahrzeuginnenverkleidung 11 bzw. reichen die die Führungsnut 10 ausbildenden Sicken derselben bis oder nahe an den stegförmigen Lagerungsabschnitt 15, wodurch dieser seitlich, d. h., in Fahrzeugquerrichtung (Y-Richtung) abgestützt ist (nicht zeichnerisch dargestellt). Ist der Ladeboden 3 so dimensioniert, dass er seitlich an die Fahrzeuginnenverkleidung 11 weitestgehend anschließt, sind die Lagerungs- und Führungssysteme in Form der Scharniere 7 und der Führungsnuten 10 vorteilhaft verdeckt.

### Bezugszeichenliste

- 1: Kraftfahrzeug
- 2: Kofferraum
- 3: Ladeboden
- 4: unterer Stauraum
- 5: oberer Stauraum
- 6: vordere Kante (Ladeboden 3)
- 7: Scharniere
- 7a: erstes Scharnierteil
- 7b: zweites Scharnierteil
- 8: Seitenkante (Ladeboden 3)
- 9: Schwenkachse
- 10: Führungsnut
- 11: Fahrzeuginnenverkleidung
- 12: Aufnahmebohrung
- 13: Zapfen
- 14: Verbindungsabschnitt
- 15: Lagerungsabschnitt
- 16: Aufnahmebuchse
- 17: Aufnahmebuchse
- 18: Lagerbuchse
- I: erste Betriebsstellung (Ladeboden 3)
- II: zweite Betriebsstellung (Ladeboden 3)

## Patentansprüche

1. Ladebodenanordnung in einem Kraftfahrzeug (1), insbesondere im Kofferraum (2) eines Personenkraftwagens, mit einem Ladeboden (3), der mittels zweier Scharniere (7) um eine in Fahrzeugquerrichtung (Y-Richtung) weisende Schwenkachse (9) schwenkbar sowie in Fahrzeuglängsrichtung (X-Richtung) verschiebbar in seitlichen Führungsnuten (10) einer Fahrzeuginnenverkleidung (11) des Kraftfahrzeugs (1) gelagert ist, **dadurch gekennzeichnet dass** in Fahrzeugquerrichtung (Y-Richtung) gesehen beidseitig am vorderen Ende des Ladebodens (3) je ein Scharnier (7) angeordnet ist, welche Scharniere (7) jeweils durch ein erstes und ein zweites untereinander schwenkbeweglich verbundenes Scharnierteil (7a, 7b) gebildet sind, wobei die ersten Scharnierteile (7a) jeweils mit dem Ladeboden (3) fest verbunden sind und die zweiten Scharnierteile (7b) mittels je eines in Fahrzeugquerrichtung (Y-Richtung) gesehen nach Fahrzeug-außen weisenden Zapfens (13) in je einer der Führungsnuten (10) verschiebbar gelagert sind, und wobei die Zapfen (13) koaxial zueinander angeordnet sind und im Hinblick auf die Schwenkachse (9) sowohl ein von der Schwenkachse (9) unterschiedliches X-Niveau als auch ein von der Schwenkachse (9) unterschiedliches Z-Niveau aufweisen.

2. Ladebodenanordnung nach Anspruch 1, **dadurch gekennzeichnet, dass** die Zapfen (13) nach hinten (+X-Richtung) und nach unten (-Z-Richtung) versetzt zur besagten Schwenkachse (9) am zweiten Scharnierteil (7b) angeordnet sind.

3. Ladebodenanordnung nach Anspruch 1 oder 2, **dadurch gekennzeichnet, dass** das jeweilige zweite Scharnierteil (7b) durch einen oberen Verbindungsabschnitt (14) zur schwenkbaren Anbindung des zweiten Scharnierteils (7b) an das erste Scharnierteil (7a) und durch einen unteren Lagerungsabschnitt (15) gebildet ist, wobei am Lagerungsabschnitt (15) der Zapfen (13) fest angeordnet ist.

4. Ladebodenanordnung nach Anspruch 3, **dadurch gekennzeichnet, dass** das erste Scharnierteil (7a) und der Verbindungsabschnitt (14) des zweiten Scharnierteils (7b) in einem abgelegten Betriebszustand des Ladebodens (3) sich in oder nahezu in einer gemeinsamen X-Y-Ebene des Kraftfahrzeugs (1) erstrecken.

5. Ladebodenanordnung nach Anspruch 3 oder 4, **dadurch gekennzeichnet, dass** der Lagerungsabschnitt (15) durch einen fest mit dem Verbindungsabschnitt (14) verbundenen Steg gebildet ist, der sich in oder nahezu in einer X-Z-Ebene des Kraftfahrzeugs (1) erstreckt.

6. Ladebodenanordnung nach einem der Ansprüche 1 bis 4, **dadurch gekennzeichnet, dass** das zweite Scharnierteil (7b) samt Zapfen (13) einstückig ausgebildet ist.

7. Kraftfahrzeug (1), insbesondere Personenkraftwagen, mit einer Ladebodenanordnung nach einem der Ansprüche 1 bis 6.

## Claims

1. Loading floor arrangement in a motor vehicle (1), in particular in the luggage compartment (2) of a passenger motor vehicle, having a loading floor (3) which by means of two hinges (7) is mounted so as to be pivotable about a pivot axis (9) that points in the vehicle transverse direction (Y-direction) and is mounted in lateral guide grooves (10) of a vehicle interior trim (11) of the motor vehicle (1) so as to be displaceable in the vehicle longitudinal direction (X-direction), **characterized in that** when viewed in the vehicle transverse direction (Y-direction), in each case a hinge (7) is disposed on either side at the front end of the loading floor (3), said hinges (7) each being formed by a first and a second hinge part (7a, 7b) that are interconnected in a mutually pivotable manner, wherein the first hinge parts (7a) each are fixedly connected to the loading floor (3), and the second hinge parts (7b) by means of in each case a stud (13) that, when viewed in the vehicle transverse direction (Y-direction), points to the outside of the vehicle, are mounted so as to be displaceable in each case in one of the guide grooves (10), and wherein the studs (13) are disposed so as to be mutually coaxial and in terms of the pivot axis (9) have an X-level that is different from that of the pivot axis (9), as well as a Z-level that is different from that of the pivot axis (9).

2. Loading floor arrangement according to Claim 1, **characterized in that** the studs (13) are disposed on the second hinge part (7b) so as to be offset to the rear (+X-direction) and to the bottom (-Z-direction) in relation to said pivot axis (9).

3. Loading floor arrangement according to either of Claims 1 and 2, **characterized in that** the respective second hinge part (7b) is formed by an upper connection portion (14) for linking in pivotable manner the second hinge part (7b) to the first hinge part (7a), and by a lower mounting portion (15), wherein the stud (13) is fixedly disposed on the mounting portion (15).

4. Loading floor arrangement according to Claim 3, **characterized in that** the first hinge part (7a) and the connection portion (14) of the second hinge part (7b) in a placed-down operating state of the loading floor (3) extend in or almost in a common X-Y-plane of the motor vehicle (1).

5. Loading floor arrangement according to either of Claims 3 and 4, **characterized in that** the mounting portion (15) is formed by a web that is fixedly connected to the connection portion (14) and that extends in or almost in an X-Z-plane of the motor vehicle (1).

6. Loading floor arrangement according to one of Claims 1 to 4, **characterized in that** the second hinge part (7b) including the stud (13) is configured so as to be integral.

7. Motor vehicle (1), in particular a passenger motor vehicle, having a loading floor arrangement according to one of Claims 1 to 6.

## Revendications

1. Dispositif de plancher de chargement dans un véhicule automobile (1), en particulier dans la malle à bagages (2) d'une voiture automobile, avec un plancher de chargement (3), qui est monté de façon pivotante au moyen de deux charnières (7) autour d'un axe de pivotement (9) orienté dans la direction transversale du véhicule (direction Y) et de façon déplaçable dans la direction longitudinale du véhicule (direction X) dans des rainures de guidage latérales (10) d'un habillage intérieur de véhicule (11) du véhicule automobile (1), **caractérisé en ce que**, en considérant la direction transversale du véhicule (direction Y), une charnière (7) est disposée respectivement de part et d'autre à l'extrémité avant du plancher de chargement (3), charnières (7) qui sont formées chacune par une première et une seconde parties de charnière (7a, 7b) reliées l'une à l'autre de façon pivotante, dans lequel les premières parties de charnière (7a) sont respectivement fixées au plancher de chargement (3) et les secondes parties de charnière (7b) sont montées de façon déplaçable respectivement dans une des rainures de guidage (10) au moyen d'un tourillon (13) orienté vers l'extérieur du véhicule en considérant la direction transversale du véhicule (direction Y), et dans lequel les tourillons (13) sont agencés de façon coaxiale l'un à l'autre et présentent, par rapport à l'axe de pivotement (9), aussi bien un niveau X différent de l'axe de pivotement (9) qu'un niveau Z différent de l'axe de pivotement (9).

2. Dispositif de plancher de chargement selon la revendication 1, **caractérisé en ce que** les tourillons (13) sont disposés sur la deuxième partie de charnière (7b) en décalage vers l'arrière (direction +X) et vers le bas (direction -Z) par rapport audit axe de pivotement (9).

3. Dispositif de plancher de chargement selon la revendication 1 ou 2, **caractérisé en ce que** la seconde partie de charnière respective (7b) est formée par une partie d'assemblage supérieure (14) pour la liaison pivotante de la seconde partie de charnière (7b) à la première partie de charnière (7a) et par une partie d'appui inférieure (15), dans lequel le tourillon (13) est agencé de façon fixe sur la partie d'appui (15).

4. Dispositif de plancher de chargement selon la revendication 3, **caractérisé en ce que** la première partie de charnière (7a) et la partie d'assemblage (14) de la seconde partie de charnière (7b) s'étendent, dans un état d'utilisation rabattu du plancher de chargement (3), dans ou approximativement dans un plan X-Y commun du véhicule automobile (1).

5. Dispositif de plancher de chargement selon la revendication 3 ou 4, **caractérisé en ce que** la partie d'appui (15) est formée par une aile reliée de façon fixe à la partie d'assemblage (14), et qui s'étend dans ou approximativement dans un plan X-Z du véhicule automobile (1).

6. Dispositif de plancher de chargement selon l'une quelconque des revendications 1 à 4, **caractérisé en ce que** la seconde partie de charnière (7b) est formée d'une seule pièce avec le tourillon (13).

7. Véhicule automobile (1), en particulier voiture automobile, avec un dispositif de plancher de chargement selon l'une quelconque des revendications 1 à 6.
